(19)

Europäisches Patentamt
European Patent Office
Office européen des brevets

(11) **EP 4 550 148 A1**

(12) **EUROPEAN PATENT APPLICATION**
published in accordance with Art. 153(4) EPC

(43) Date of publication:
07.05.2025 Bulletin 2025/19

(21) Application number: 23830152.7

(22) Date of filing: 25.06.2023

(51) International Patent Classification (IPC):
*G06F 11/10* (2006.01)

(86) International application number:
PCT/CN2023/102218

(87) International publication number:
WO 2024/001974 (04.01.2024 Gazette 2024/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.06.2022 CN 202210764325

(71) Applicant: Cloud Intelligence Assets Holding
(Singapore)
Private Limited
Singapore 189554 (SG)

(72) Inventors:
• CHEN, Liang
Hangzhou, Zhejiang 310030 (CN)
• WEI, Shuzhan
Hangzhou, Zhejiang 310030 (CN)
• GU, Junqing
Hangzhou, Zhejiang 310030 (CN)
• ZHAO, Yafei
Hangzhou, Zhejiang 310030 (CN)
• DONG, Yuanyuan
Hangzhou, Zhejiang 310030 (CN)

(74) Representative: Barker Brettell LLP
100 Hagley Road
Edgbaston
Birmingham B16 8QQ (GB)

(54) **LOCAL RECOVERY METHOD AND DEVICE FOR DATA, AND STORAGE MEDIUM**

(57) Embodiments of the present application provide a data local recovery method, a device and a storage medium. A global parity block and a local parity block in any data group of a data set are obtained by encoding a data block, and when any data block within the data group is lost, the data block can be recovered according to remaining data blocks, the global and local parity blocks. When the local parity block is lost, the local parity block can be recovered according to the data block within the data group. The local parity block includes encoding information of the global parity block, and when the global parity block is lost, the global parity block can be recovered according to the data block and the local parity block. Thus, local recovery of any object block within the data group is realized. A sum of local parity blocks of the data set is linearly independent of global parity blocks of the data set, and the lost object blocks can be recovered when the number of the lost object blocks in the data set is greater than the number of the global parity blocks, thereby further improving the fault tolerance capability of the data local recovery method.

Determining multiple data groups included in a data set, where object blocks in any data group include: a data block, a global parity block and a local parity block, where in the data group, the global parity block and the local parity block are obtained by encoding the data block, and the local parity block includes encoding information of the global parity block — 101

In response to a recovery request for any target object block in the data group, recovering the target object block according to remaining readable object blocks in the data group, where a sum of local parity blocks in the data set is linearly independent of global parity blocks in the data set — 102

FIG. 1

## Description

The present application claims priority to Chinese patent application No. 202210764325.1, filed to China National Intellectual Property Administration on June 29, 2022 and entitled "DATA LOCAL RECOVERY METHOD, DEVICE, AND STORAGE MEDIUM", which is hereby incorporated by reference in its entirety.

## TECHNICAL FIELD

The present application relates to the field of computer technologies and, in particular, to a data local recovery method, a device, and a storage medium.

## BACKGROUND

Erasure code (Erasure Code) is an encoding fault tolerance technology, and is used to recover original data when some data is lost. The erasure code can occupy less storage space while ensuring reliability, and is thus widely applied to distributed storage systems. Compared to traditional replication-type data recovery methods, the erasure code has a problem of read amplification during data reconstruction.

At present, there is a method for local data recovery based on local self-recovery erasure code (Local Repair Code, LRC). However, the existing local repair solution still cannot perform local recovery on a global parity block whiling having high fault tolerance capability. Therefore, a new solution needs to be proposed.

## SUMMARY

Various aspects of the present application provide a data local recovery method, a device, and a storage medium, which are used for performing local recovery on a global parity block, and improving the fault tolerance capability of the data local recovery method.

An embodiment of the present application further provides a data local recovery method, including: determining multiple data groups included in a data set, where object blocks in any data group include: a data block, a global parity block and a local parity block; in response to a recovery request for any target object block in the data group, recovering the target object block according to remaining readable object blocks in the data group; where in the data group, the global parity block and the local parity block are obtained by encoding the data block, the local parity block includes encoding information of the global parity block, and a sum of local parity blocks in the data set is linearly independent of global parity blocks in the data set.

Optionally, the method further includes: in response to a recovery request for a first number of object blocks in the data set, recovering the first number of object blocks according to remaining readable object blocks in the data set; where the first number is greater than a number of the global parity blocks in the data set.

Optionally, before responding to the recovery request for any target object block in the data group, according to the remaining readable object blocks in the data group, the method further includes: determining a first matrix of r+1 dimensions, where r is a positive integer; correspondingly generating r derived rows according to any r data rows in the first matrix, where the r derived rows are used for encoding to obtain r local parity blocks, and any derived row includes elements in a data row used to generate the derived row; replacing a data row other than the any r data rows in the first matrix with the r derived rows to obtain a second matrix; connecting an identity matrix behind the second matrix to obtain an encoding matrix; encoding data blocks in the data set by using the encoding matrix to obtain the global parity blocks and the local parity blocks corresponding to the multiple data groups.

Optionally, in the encoding matrix, any r+1 columns are a column full rank matrix.

Optionally, the first matrix is a Cauchy matrix.

Optionally, correspondingly generating the r derived rows according to any r data rows in the first matrix includes: adding, according to a correspondence between elements of different columns in the r data rows and the data groups during matrix calculation, additional items to the elements of different columns in the r data rows to obtain the r derived rows; where in a same derived row, the additional items are added to elements of columns corresponding to any one data group, and in different derived rows, data groups corresponding to elements to which the additional items are added are different.

Optionally, adding, according to the correspondence between the elements of different columns in the r data rows and the data groups during matrix calculation, the additional items to the elements of different columns in the r data rows includes: for an element of a $j^{th}$ column in an $i^{th}$ data row of the r data rows, determining an additional item of the element of the $j^{th}$ column in the $i^{th}$ data row according to elements of a $j^{th}$ column in r+1 rows of the first matrix; adding the additional item to the element of the $j^{th}$ column in the $i^{th}$ data row to obtain a derived row corresponding to the $i^{th}$ data row, where i and j are positive integers.

Optionally, a result of summation of elements in the r derived rows is equal to a result of summation of elements in a $(r+1)^{th}$ row in the first matrix, where the summation includes an exclusive OR operation of elements.

In the local data recovery method provided in the embodiments of the present application, when the recovery request for any target object block in any data group in the data set exists, the target object block can be recovered according to the remaining readable object blocks in the data group. The any target object block may be the data block, the global parity block or the local parity block in the data group. The global parity block and the local parity block are obtained by encoding the data block, and when any data block within the data group is lost, the data block can be recovered according to the remaining data blocks, the global parity block, and the local parity block. The local parity block includes the encoding information of the global parity block, and when the global parity block is lost, the global parity block can be recovered according to the data block and the local parity block. When the local parity block is lost, the local parity block can be recovered according to the data block within the data group. Thus, local recovery for any object block within the data group is achieved. The sum of the local parity blocks in the data set is linearly independent of the global parity blocks in the data set, so the lost object blocks can be recovered when the number of the lost object blocks in the data set is greater than the number of the global parity blocks. Thus, while achieving local recovery of any object block within the group, the fault tolerance capability of the data local recovery method can be improved.

## BRIEF DESCRIPTION OF THE DRAWINGS

The accompanying drawings described herein are used to provide further understanding of the present application, and constitute a part of the present application. The illustrative embodiments of the present application and their descriptions are used to explain the present application, and do not constitute improper limitation of the present application. In the accompanying drawings:

FIG. 1 is a schematic flowchart of a data local recovery method provided by an exemplary embodiment of the present application;
FIG. 2 is a schematic diagram of global parity blocks and local parity blocks corresponding to r data groups;

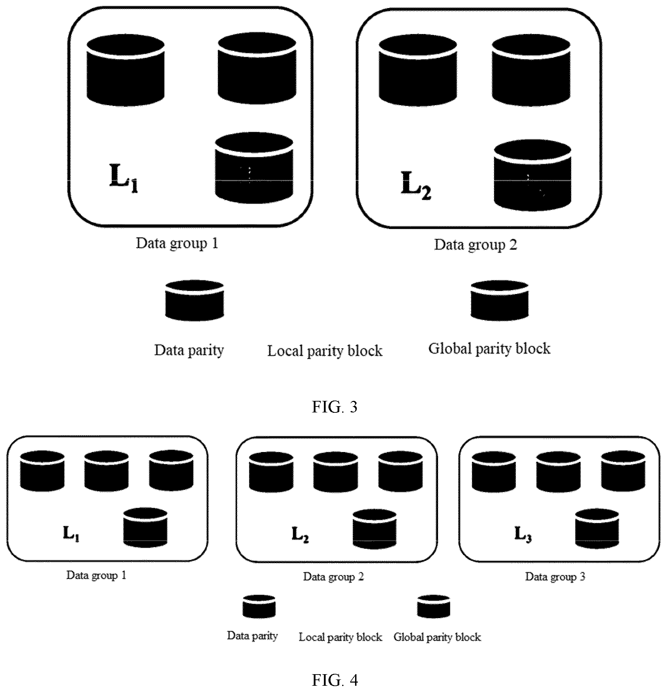

FIG. 3 is a schematic diagram of global parity blocks and local parity blocks corresponding to two data groups;
FIG. 4 is a schematic diagram of global parity blocks and local parity blocks corresponding to three data groups;
FIG. 5 is a schematic structural diagram of a server provided by an exemplary embodiment of the present application.

## DESCRIPTION OF EMBODIMENTS

In order to make objectives, technical solutions, and advantages of the present application more obvious, the technical solutions of the present application will be described clearly and comprehensively in conjunction with specific embodiments and corresponding accompanying drawings of the present application. Obviously, the described embodiments are part of the embodiments of the present application, but not all of the embodiments. Based on the embodiments of the present application, all other embodiments obtained by those of ordinary skill in the art without creative efforts belong to the protection scope of the present application.

The terms used in the embodiments of the present invention are for the purpose of describing specific embodiments only, and are not intended to limit the present invention. The singular forms of "a/an", "the", and "said" used in the embodiments of the present invention and attached claims are also intended to include plural forms, unless the context clearly indicates other meanings. "Multiple" generally includes at least two, but does not exclude a case of including at least one.

It should be understood that the term "and/or" used herein is only an association relationship for describing associated objects, and means that there may be three relationships. For example, A and/or B may represent three situations, namely, A exists alone, A and B exist at the same time, and B exists alone. In addition, the character "/" herein generally means that the associated objects before and after the character is of an "or" relationship.

It should also be noted that the terms "including", "comprising" or any other variation thereof are intended to cover non-exclusive inclusion, such that a commodity or a system that includes a series of elements not only includes those elements, but also includes other elements that are not explicitly listed, or further includes elements that are inherent to the commodity or the system. Without further limitations, an element defined by a statement "including a/an..." does not exclude the existence of other same elements in a commodity or a system that includes the element.

At present, there are some methods for performing local data recovery based on local self-recovery erasure code (Local Repair Code, LRC). In these methods, data is divided into multiple groups (groups), and local parity blocks can be generated by data within a group. When the number of lost data blocks within the group does not exceed the number of the local parity blocks within the group, the lost data blocks can be recovered through other data blocks within the group, thereby reducing the traffic during data block recovery.

In a typical method, global parity blocks P are obtained by operation on all data blocks D, and local parity blocks L are obtained by operation on data blocks within groups. The local parity block L can be recovered in a local manner. However, the global parity block has no local recovery property, that is, all data blocks D need to be read to recover the global parity block P.

In another typical method, global parity blocks P are obtained by operation on all data blocks D, and local parity blocks L are obtained by operation on data blocks within groups. Differently, when constructing an encoding matrix, a sum of all local parity blocks is required to be consistent with a sum of all global parity blocks, in terms of results. Thus, when a global parity block is lost, the recovery of the global parity block can be achieved through the local parity blocks, without reading all data blocks D. However, this approach sacrifices the fault tolerance capability of LRC. That is, only any r blocks may be tolerated to be lost. In other words, when the number of lost blocks is less than or equal to r, the lost blocks can be recovered, where r is the number of global parity blocks, and r is a positive integer.

With regard to the technical problem that local repair methods in the prior art cannot balance the fault tolerance capability and the local recovery for any lost block, a solution is provided in some embodiments of the present application. The technical solutions provided by embodiments of the present application are described in detail below with reference to the accompanying drawings.

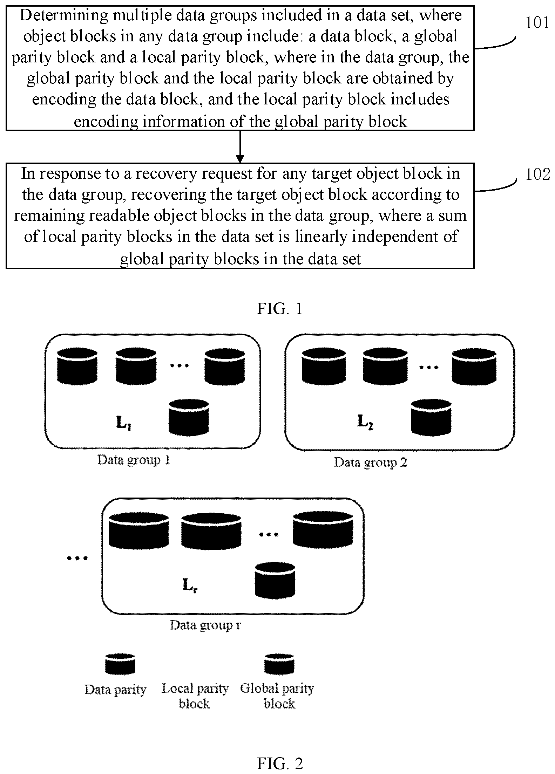

FIG. 1 is a schematic flowchart of a data local recovery method provided by an exemplary embodiment of the present application, and the method may include the steps shown in FIG. 1.

Step 101: determining multiple data groups included in a data set, where object blocks in any data group include: a data block, a global parity block and a local parity block, where in the data group, the global parity block and the local parity block are obtained by encoding the data block, the local parity block includes encoding information of the global parity block.

Step 102: in response to a recovery request for any target object block in the data group, recovering the target object block according to remaining readable object blocks in the data group, where a sum of local parity blocks in the data set is linearly independent of global parity blocks in the data set.

An executive entity of this embodiment may be a server storing data, and the server may be a conventional server, a cloud server, an elastic computing instance on a cloud, or a virtualized data center, etc., which is not limited in this embodiment. The server runs a data storage application that is configured to store and manage received data.

In this embodiment, the data storage application on the server can perform local repair on lost data based on erasure code, so as to reduce the cost required for data repair.

The data set includes multiple data groups, used to perform local calculation during data failure recovery. The number of data blocks included in each data group may be obtained by dividing according to requirements, which is not limited in this embodiment. Each data group may include multiple object blocks, and the multiple object blocks may include the data block(s), the global parity block(s), and the local parity block(s) (local repair parity).

Any target object block to be recovered may be any one of a data block, a global parity block, or a local parity block. When any object block in a data group is lost, the lost object block can be recovered through remaining data blocks.

The global parity block is obtained by encoding all data blocks (i.e. global data blocks) in the data set, and can be used to recover any global data block when the global data block is lost. That is, for any data group, when any data block in the data group is lost, local recovery may be implemented for the lost data block through the global data block in the data group. The local parity block in any data group is obtained by encoding according to the data block in the data group. In addition, by designing an encoding process of the local parity block, the local parity block includes the encoding information of the global parity block. Thus, when the global parity block corresponding to the data group is lost, the global parity block may be recovered through the data block and the local parity block in the data group where the global parity block is located.

When the data set includes multiple data groups, the multiple data groups may correspond to multiple global parity blocks, and the sum of multiple local parity blocks is linearly independent of the global parity blocks in the data set. That is, the sum of the multiple local parity blocks may be regarded as a new global parity block, and the new global parity block is linearly independent of the original global parity blocks in the data set. Therefore, when there are originally r global parity blocks in the data set, the sum of the multiple local parity blocks may be used as the $(r+1)^{th}$ global parity block, so that when any r+1 object blocks in the data set are lost, remaining object blocks can be used to perform data recovery on the r+1 object blocks.

On this basis, optionally, the server may, in response to a recovery request for a first number of object blocks in the data set, recover the first number of object blocks according to remaining readable object blocks in the data set, where the first number is greater than the number of the global parity blocks in the data set. Generally, the first number is the number of the global parity blocks plus one. That is, when there are r global parity blocks in the data set, it can be tolerated that when any r+1 object blocks in the data set are lost, data recovery on the r+1 object blocks is performed by using remaining object blocks.

In this embodiment, when the recovery request for any target object block in any data group in the data set exists, the target object block can be recovered according to the remaining readable object blocks in the data group. The any target object block may be the data block, the global parity block or the local parity block in the data group. The global parity block and the local parity block are obtained by encoding the data block, and when any data block within the data group is lost, the data block can be recovered according to the remaining data blocks, the global parity block, and the local parity block. The local parity block includes the encoding information of the global parity block, and when the global parity block is lost, the global parity block can be recovered according to the data block and the local parity block. When the local parity block is lost, the local parity block can be recovered according to the data block within the data group. Thus, local recovery for any object block within the data group is achieved. The sum of the local parity blocks in the data set is linearly independent of the global parity blocks in the data set, so the lost object blocks can be recovered when the number of the lost object blocks in the data set is greater than the number of the global parity blocks. Thus, while achieving local recovery of any object block within the group, the fault tolerance capability of the data local recovery method can be improved.

Before executing data recovery, the server may generate the global parity blocks and the local parity blocks based on a principle of erasure code. The global parity blocks and the local parity blocks are obtained by encoding the data blocks in the data set through an encoding matrix. An optional generation manner of the encoding matrix will be described below.

It is assumed that the data set includes k data blocks, and the data set is divided into g data groups, and it is assumed that the number of global parity blocks and the number of local parity blocks are both r, k=g*r. When each data group includes one global parity block, g=r.

In some optional embodiments, the server may determine a first matrix of r+1 dimensions, where the number of rows in the first matrix is r+1 and the number of columns is k. The encoding matrix may be constructed according to the first matrix, where the encoding matrix is used to describe, in the form of a matrix, a process of obtaining parity blocks by encoding.

In a process of constructing the encoding matrix, r derived rows may be generated correspondingly according to any r data rows in the first matrix, where the r derived rows are used for encoding to obtain r local parity blocks, and any derived row includes elements in a data row used to generate the derived row, so that the local parity block obtained by encoding includes the encoding information of the global parity block.

After determining the r derived rows, a data row other than the any r data rows in the first matrix may be replaced with the r derived rows to obtain a second matrix. The terms "first" and "second" are used to define the described matrices, which is merely used for ease of description and distinction, and does not constitute any other limitations on the matrices. After determining the second matrix, an identity matrix may be connected behind the second matrix to obtain the encoding matrix. All elements on a diagonal (referred to as a main diagonal) from an upper left corner to a lower right corner of the identity matrix are 1, all other elements are 0, and the identity matrix is a full rank matrix. In this embodiment, an element of 1 in the identity matrix is used to represent a parity block to be encoded. In the encoding matrix, an element of 1 in the same row as an original data row in the first matrix is used to calculate the global parity block, and an element of 1 in the same row as a derived data row is used to calculate the local parity block.

After constructing the encoding matrix, the data blocks in the data set may be encoded by using the encoding matrix to obtain the global parity blocks and the local parity blocks corresponding to the multiple data groups, which will be described in detail below.

Optionally, in this embodiment, an encoding target may be set to generate r+1 linearly-independent global parity blocks. Among the r+1 global parity blocks, one global parity block is obtained by performing summation on the r local parity blocks. Before generating the derived rows, the first matrix may be designed such that after an identity matrix corresponding to the r+1 global parity blocks is added behind the first matrix to obtain a new matrix, a matrix formed by any r+1 columns that are extracted from the new matrix is a column full rank matrix, so that any r+1 columns in the new matrix are linearly independent. Therefore, when any r+1 blocks among k data blocks and r+1 global parity blocks are lost, repaired can be performed through remaining blocks.

In some embodiments, the first matrix may be implemented as a Cauchy matrix (Cauchy matrix), and when an identity matrix of r*r dimensions is connected behind a Cauchy matrix of r*g dimensions, it may enable that a matrix formed by any r+1 columns is a column full rank matrix.

In the first matrix of the r+1 rows mentioned above, any r data rows may be used to calculate r global parity blocks, and the remaining 1 data row may be used to calculate respective local parity blocks of g data groups. Optionally, r derived rows can be generated according to the remaining 1 data row, and the r derived rows correspond to the g data groups. Based on the r data rows and the r derived rows, an adjusted second matrix may be obtained.

To ensure that a second encoding matrix with the identity matrix being connected behind has same linear independence characteristics as the first matrix with the identity matrix being connected behind, a sum of the r derived rows in the second matrix can be made the same as a sum of the remaining 1 data row in the first matrix.

Optionally, according to a correspondence between elements of different columns in the r data rows in the first matrix and the data groups during matrix calculation, additional items may be added to the elements of different columns in the r data rows to obtain the r derived rows. In a same derived row, the additional items are added to elements of columns corresponding to any one data group, and in different derived rows, data groups corresponding to elements to which the additional items are added are different. The additional items need to make the sum of the elements in the r derived rows the same as the sum of the remaining 1 data row.

For example, in a certain data row, elements corresponding to a data group g1 may be locally adjusted to obtain a derived data row corresponding to the data group g1. For another example, elements corresponding to a data group g2 in another data row may be locally adjusted to obtain a derived data row corresponding to the data group g2. The r derived data rows are used to calculate the respective local parity blocks corresponding to the g data groups, respectively, to obtain the r local parity blocks.

In the following embodiments, for ease of description and calculation, the first to the r$^{th}$ rows in the first matrix are used to calculate the r global parity blocks, and the (r+1)$^{th}$ row is used to calculate the r local parity blocks. When generating the r derived rows, the additional items may be added on the basis of each row in the first matrix, so as to obtain the r derived rows.

The additional items satisfy the following conditions.

1. In a same derived row, the additional items are added to elements corresponding to any one data group, and in different derived rows, data groups corresponding to elements to which the additional items are added are different.
2. A result of summation of elements in the r derived rows is equal to a result of summation of elements in the (r+1)$^{th}$ row in the first matrix, where the summation is an exclusive OR operation.

For example, for the first data group formed by the first to the g$^{th}$ pieces of data, the additional items may be added to elements, corresponding to the first data group, in the first row of the first matrix, and the other elements remain unchanged, to obtain the second row of the second matrix. The second row may be used to encode a local parity block corresponding to the first data group. For another example, for the second data group formed by the (g-1)$^{th}$ to the (2g)$^{th}$ pieces of data, the additional items may be added to elements, corresponding to the second data group, in the second row of the first matrix, and the other elements remain unchanged, to obtain the fourth row of the second matrix. The fourth row may be used to encode a local parity block corresponding to the second data group. By analogy, for the g$^{th}$ data group formed by the ((r-1)g+1)$^{th}$ to the (rg)$^{th}$ pieces of data, the additional items may be added to elements, corresponding to the g$^{th}$ data group, in the (2r-1)$^{th}$ row of the first matrix, and the other elements remain unchanged, to obtain the (2r)$^{th}$ row of the second matrix. The (2r)$^{th}$ row may be used to encode a local parity block corresponding to the g$^{th}$ data group.

In the following, further description will be given in conjunction with a specific calculation process.

A first matrix of (r+1) *k dimensions is determined as:

$$\left[ a_{ij} \; : \; 1 \; \leq \; i \; \leq \; r \; + \; 1, 1 \; \leq \; j \; \leq \; k \right]_{(r+1)*k},$$

which is expanded to:

$$\begin{bmatrix} a_{1,1} & \cdots & a_{1,g} & a_{1,g+1} & \cdots & a_{1,2g} & \cdots & a_{1,(r-1)g+1} & \cdots & a_{1,rg} \\ a_{2,1} & \cdots & a_{2,g} & a_{2,g+1} & \cdots & a_{2,2g} & \cdots & a_{2,(r-1)g+1} & \cdots & a_{2,rg} \\ a_{3,1} & \cdots & a_{3,g} & a_{3,g+1} & \cdots & a_{3,2g} & \cdots & a_{3,(r-1)g+1} & \cdots & a_{3,rg} \\ \cdots & \cdots & \cdots & \cdots & \cdots & \cdots & \cdots & \cdots & \cdots & \cdots \\ a_{r+1,1} & \cdots & a_{r+1,g} & a_{r+1,g+1} & \cdots & a_{r+1,2g} & \cdots & a_{r+1,(r-1)g+1} & \cdots & a_{r+1,rg} \end{bmatrix}.$$

The first to the r$^{th}$ rows in the first matrix may be used for encoding to generate r global parity blocks, and the (r+1)$^{th}$ row may be used for encoding to generate r local parity blocks. Based on the first matrix, a second matrix of 2r*k dimensions may be generated. The second matrix includes the first to the r$^{th}$ rows in the first matrix and the r derived rows, where the derived rows are distributed in the second row, the fourth row..., and the (2r)$^{th}$ row of the second matrix. During encoding, an identity matrix of 2r*k may be added behind the second matrix to obtain an encoding matrix H, and any r+1 columns in the encoding matrix H are a row full rank matrix.

$$H =$$

$$\begin{bmatrix}
a_{1,1} & .. & a_{1,g} & a_{1,g+1} & .. & a_{1,2g} & .. & a_{1,(r-1)g+1} & .. & a_{1,rg} & 1 & 0 & 0 & 0 & .. & 0 & 0 \\
a_{1,1}+d_1 & .. & a_{1,g}+d_g & a_{1,g+1} & .. & a_{1,2g} & .. & a_{1,(r-1)g+1} & .. & a_{1,rg} & 0 & 1 & 0 & 0 & .. & 0 & 0 \\
a_{2,1} & .. & a_{2,g} & a_{2,g+1} & .. & a_{2,2g} & .. & a_{2,(r-1)g+1} & .. & a_{2,rg} & 0 & 0 & 1 & 0 & .. & 0 & 0 \\
a_{2,1} & .. & a_{2,g} & a_{2,g+1}+d_{g+1} & .. & a_{2,2g}+d_{2g} & .. & a_{2,(r-1)g+1} & .. & a_{2,rg} & 0 & 0 & 0 & 1 & .. & 0 & 0 \\
.. & .. & .. & .. & & .. & .. & .. & .. & .. & .. & .. & .. & .. & .. & .. & .. \\
a_{r,1} & .. & a_{r,g} & a_{r,g+1} & .. & a_{r,2g} & .. & a_{r,(r-1)g+1} & .. & a_{r,rg} & 0 & 0 & 0 & 0 & .. & 1 & 0 \\
a_{r,1} & .. & a_{r,g} & a_{r,g+1} & .. & a_{r,2g} & .. & a_{r,(r-1)g+1}+d_{(r-1)g+1} & .. & a_{r,rg}+d_{rg} & 0 & 0 & 0 & 0 & .. & 0 & 0
\end{bmatrix}$$

Therein, $d_j$ is an additional item used to locally adjust the first to the $r^{th}$ rows in the first matrix to obtain the r derived rows.

$d_1 \sim d_g$ are added to elements, corresponding to the first data group, in the first row of the first matrix. $d_{g+1} \sim d_{2g}$ are added to elements, corresponding to the second data group, in the second row of the first matrix. $d_{(r-1)g+1} \sim d_{rg}$ are added to elements, corresponding to the $g^{th}$ data group, in the $r^{th}$ row of the first matrix. That is, it is satisfied that in the same derived row, the additional items are added to elements corresponding to any one data group, and in different derived rows, data groups corresponding to elements to which the additional items are added are different.

Optionally, in order to make a result of summation of elements in the r derived rows equal to a result of summation of elements in the $(r+1)^{th}$ row of the first matrix, a summation operation may be designed as an exclusive OR operation, and according to elements of the same column in the r data rows, an additional item corresponding to this column is calculated.

Optionally, taking an element of the $j^{th}$ column in the $i^{th}$ data row of the r data rows as an example, an additional item of the element of the $j^{th}$ column in the $i^{th}$ data row may be determined according to elements of the $j^{th}$ column in r+1 rows of the first matrix. The additional item is added to the element of the $j^{th}$ column in the $i^{th}$ data row to obtain a derived row corresponding to the $i^{th}$ data row. A calculation process for the additional item $d_j$ of the $j^{th}$ column in the $i^{th}$ row is as follows:

$$d_j = \sum_{i=1}^{r+1} a_{ij}, \ 1 \leq j \leq k \qquad \text{Formula 1-1.}$$

Corresponding additional items are added to elements corresponding to different data groups in the first matrix to generate the r derived rows corresponding to the local parity blocks. In the second matrix mentioned above, the summation (exclusive OR) operation is performed on the second row, the fourth row..., and the $(2r)^{th}$ row to obtain:

$$h_2 + h_4 + \ldots + h_{2r} = a_{r+1,1} + a_{r+1,2}, \ldots, a_{r+1,rg}.$$

That is, this result of summation is equal to the result of summation of the elements in the $(r+1)^{th}$ row in the first matrix. Therefore, the sum of the local parity blocks calculated by the r derived rows has a linearly independent relationship with the r global parity blocks. The sum of the local parity blocks encoded by the r derived rows may be regarded as a new global parity block. The new global parity block is linearly independent of the r global parity blocks, and thus the loss of any r+1 data blocks can be tolerated.

Matrix calculation is performed on the encoding matrix H that is obtained by constructing based on the above method and a k-dimension matrix D formed by k data blocks, and H*D=0 is set, so that the global parity blocks and the local parity blocks may be obtained. Namely:

$$h_1 * D + P_1 = 0$$
$$h_2 * D + L_1 = 0$$
$$\ldots \qquad\qquad \text{Formula 1-2.}$$
$$h_{2r-1} * D + P_r = 0$$
$$h_{2r} * D + L_r = 0$$

Based on the above formula, $P_1, P_2, P_3..., P_r$ may be determined and used as global parity blocks. $L_1, L_2, L_3..., L_r$

correspond to the derived rows, and may be used as local parity blocks.

By converting the above formula, the global parity block $P_i$ may be expressed as:

$$P_i = \sum_{j=1}^{k} a_{ij} \times D_j \qquad \text{Formula 1-3.}$$

The local parity block $L_i$ is expressed as:

$$L_i = \sum_{j=1}^{k} a_{ij} \times D_j + \sum_{j=1}^{r} d_{r(i-1)+j} \times D_{r(i-1)+j}, \quad 1 \le i \le r \quad \text{Formula 1-4.}$$

Therein, k data blocks, r global parity blocks, and r local parity blocks may be divided into r data groups, namely:

$$G_1 = \{D_1, D_2, \ldots, D_g, L_1, P_1\},$$

$$G_2 = \{D_{g+1}, D_{g+2}, \ldots, D_{2g}, L_2, P_2\},$$

$$G_r = \{D_{(r-1)g+1}, D_{(r-1)g+2}, \ldots, D_{rg}, L_r, P_r\}.$$

When a single parity block in any data group is lost, data recovery may be performed through the other g+1 data blocks within the group. An addition of local parity blocks $L_1, L_2..., L_r$ may be regarded as a new global parity block $P_{r+1}$. $P_1$, $P_2, P_3..., P_r, P_{r+1}$ are linearly independent of each other due to a linear independent relationship between $L_1, L_2..., L_r$ and $P_1, P_2..., P_r$. Therefore, when any r+1 data block in $D_1, D_2, D_3..., D_k, P_1, P_2..., P_r, L_1, L_2..., L_r$ is lost, the lost data block may be recovered according to remaining data blocks.

Based on the above embodiments, an encoding manner with high reliability, high performance, and parameter flexibility is realized. High reliability means that, an encoding result can satisfy that when any r+1 blocks are lost, data can be recovered. High performance means that, when any single block in a group is lost, recovery can be performed through local data blocks, thereby reducing read amplification in a data recovery process. Parameter flexibility means that, it can be satisfied that the number of data blocks is divisible by the number of global parity blocks, and when the number of data blocks changes, an accurate encoding matrix structure can be provided, thereby satisfying the encoding requirements in multiple situations.

To describe the embodiments of the present application in further detail, an example with r being implemented as 2 and k being implemented as 4 is taken for description.

It is assumed that a data set includes data blocks $D_1, D_2, D_3$ and $D_4$. The data set is grouped to obtain a data group $G_1$ including $D_1$ and $D_2$, and a data group $G_2$ including $D_3$ and $D_4$.

A first matrix is determined as:

$$\begin{bmatrix} a_{11} & a_{12} & a_{13} & a_{14} \\ a_{21} & a_{22} & a_{23} & a_{24} \\ a_{31} & a_{32} & a_{33} & a_{34} \end{bmatrix}.$$

Summation is performed on the rows in the first matrix to obtain $d_j$:

$$d_j = \sum_{i=1}^{3} a_{ij}, \quad 1 \le j \le 4 \qquad \text{Formula 2-1.}$$

A second matrix is constructed by using the first matrix and a calculation result from Formula 1, and an identity matrix is connected behind the second matrix to obtain an encoding matrix:

$$\begin{bmatrix} a_{1,1} & a_{1,2} & a_{1,3} & a_{1,4} & 1 & 0 & 0 & 0 \\ a_{1,1} + d_1 & a_{1,2} + d_2 & a_{1,3} & a_{1,4} & 0 & 1 & 0 & 0 \\ a_{2,1} & a_{2,2} & a_{2,3} & a_{2,4} & 0 & 0 & 1 & 0 \\ a_{2,1} & a_{2,2} & a_{2,3} + d_3 & a_{2,4} + d_4 & 0 & 0 & 0 & 0 \end{bmatrix}.$$

Based on the above Formula 2-1, a sum of the second row and the fourth row in the second matrix is calculated to obtain:

$$h_2 + h_4 = a_{1,1} + d_1 + a_{1,2} + d_2 + a_{1,3} + a_{1,4} + a_{2,1} + a_{2,2} + a_{2,3} + d_3 + a_{2,4} + d_4$$
$$= a_{1,1} + (a_{1,1} + a_{2,1} + a_{3,1}) + a_{1,2} + (a_{1,2} + a_{2,2} + a_{3,2}) + a_{1,3} + a_{1,4} + a_{2,1} + a_{2,2} +$$
$$+ a_{2,3} + (a_{1,3} + a_{2,3} + a_{3,3}) + a_{2,4} + (a_{1,4} + a_{2,4} + a_{3,4})$$
$$= a_{3,1} + a_{3,2} + a_{3,3} + a_{3,4}.$$

That is, the sum of the second row and the third row in the second matrix is equal to a sum of the third row in the first matrix, so that any three columns in the encoding matrix satisfy linear independence characteristics.

Next, the global parity blocks and the local parity blocks can be obtained by performing matrix operation on the data blocks $D_1$, $D_2$, $D_3$ and D4 and the encoding matrix mentioned above.

The global parity block $P_i$ is expressed as:

$$P_i = \sum_{j=1}^{4} a_{ij} \times D_j \qquad\qquad \text{Formula 2-2.}$$

The local parity block $L_i$ is expressed as:

$$L_i = \sum_{j=1}^{4} a_{ij} \times D_j + \sum_{j=1}^{2} d_{2(i-1)+j} \times D_{2(i-1)+j}, \quad 1 \le i \le 2 \quad \text{Formula 2-3.}$$

Based on the above Formula 2-2 and Formula 2-3, global parity blocks $P_1$, $P_2$ and local parity blocks $L_1$, $L_2$ can be obtained.

The above data blocks $D_1$, $D_2$, $D_3$ and $D_4$, the global parity blocks $P_1$ and $P_2$, and the local parity blocks $L_1$ and $L_2$ may be divided into two data groups: $G_1 = \{D_1, D_2, L_1, P_1\}$, $G_2 = \{D_3, D_4, L_2, P_2\}$.

When a single parity block in any data group is lost, data recovery may be performed through the other three data blocks within the group. For example, when $D_1$ is lost, $D_1$ can be recovered through $D_2$, $L_1$ and $P_1$.

An addition of the local parity blocks $L_1$ and $L_2$ may be regarded as a new global parity block $P_3$. $P_1$, $P_2$, $P_3$ are linearly independent of each other due to a linear independent relationship between the sum of $L_1$ and $L_2$ and $P_1$, $P_2$. Therefore, when any three data blocks in $D_1$, $D_2$, $D_3$, $D_4$, $P_1$, $P_2$, $L_1$, $L_2$ are lost, the lost data blocks may be recovered according to remaining data blocks.

Description will be given below with an example in which r is implemented as 3 and k is implemented as 9.

It is assumed that a data set includes data blocks $D_1$, $D_2$, $D_3$, $D_4$, $D_5$, $D_6$, $D_7$, $D_8$, $D_9$. The data set is grouped to obtain a data group $G_1$ including $D_1$, $D_2$ and $D_3$, a data group $G_2$ including $D_4$, $D_5$ and $D_6$, and a data group $G_3$ including $D_7$, $D_8$ and $D_9$.

A first matrix is determined as:

$$
\begin{bmatrix}
a_{1,1} & a_{1,2} & a_{1,3} & a_{1,4} & a_{1,5} & a_{1,6} & a_{1,7} & a_{1,8} & a_{1,9} \\
a_{2,1} & a_{2,2} & a_{2,3} & a_{2,4} & a_{2,5} & a_{2,6} & a_{2,7} & a_{2,8} & a_{2,9} \\
a_{3,1} & a_{3,2} & a_{3,3} & a_{3,4} & a_{3,5} & a_{3,6} & a_{3,7} & a_{3,8} & a_{3,9} \\
a_{4,1} & a_{4,2} & a_{4,3} & a_{4,4} & a_{4,5} & a_{4,6} & a_{4,7} & a_{4,8} & a_{4,9}
\end{bmatrix}
.
$$

Summation is performed on the rows in the first matrix to obtain $d_j$:

$$
d_j = \sum_{i=1}^{4} a_{ij}, \quad 1 \le j \le 9 \qquad \text{Formula 3-1.}
$$

A second matrix is constructed by using the first matrix and a calculation result from Formula 1, and an identity matrix is connected behind the second matrix to obtain an encoding matrix:

$$
\begin{bmatrix}
a_{1,1} & a_{1,2} & a_{1,3} & a_{1,4} & a_{1,5} & a_{1,6} & a_{1,7} & a_{1,8} & a_{1,9} & 1 & 0 & 0 & 0 & 0 & 0 \\
a_{1,1}+d_1 & a_{1,2}+d_2 & a_{1,3}+d_3 & a_{1,4} & a_{1,5} & a_{1,6} & a_{1,7} & a_{1,8} & a_{1,9} & 0 & 1 & 0 & 0 & 0 & 0 \\
a_{2,1} & a_{2,2} & a_{2,3} & a_{2,4} & a_{2,5} & a_{2,6} & a_{2,7} & a_{2,8} & a_{2,9} & 0 & 0 & 1 & 0 & 0 & 0 \\
a_{2,1} & a_{2,2} & a_{2,3} & a_{2,4}+d_4 & a_{2,5}+d_5 & a_{2,6}+d_6 & a_{2,7} & a_{2,8} & a_{2,9} & 0 & 0 & 0 & 1 & 0 & 0 \\
a_{3,1} & a_{3,2} & a_{3,3} & a_{3,4} & a_{3,5} & a_{3,6} & a_{3,7} & a_{3,8} & a_{3,9} & 0 & 0 & 0 & 0 & 1 & 0 \\
a_{3,1} & a_{3,2} & a_{3,3} & a_{3,4} & a_{3,5} & a_{3,6} & a_{3,7}+d_7 & a_{3,8}+d_8 & a_{3,9}+d_9 & 0 & 0 & 0 & 0 & 0 & 1
\end{bmatrix}
.
$$

Based on the above Formula 3-1, a sum of the second row, the fourth row and the sixth row in the second matrix is calculated to obtain:

$$
h_2 + h_4 + h_6 = a_{4,1} + a_{4,2} + a_{4,3} + a_{4,4} + a_{4,4}.
$$

That is, the sum of the second row, the fourth row and the sixth row in the second matrix is equal to a sum of the third row in the first matrix, so that any three columns in the encoding matrix satisfy linear independence characteristics.

Next, the global parity blocks and the local parity blocks can be obtained by performing matrix operation on the data blocks $D_1$, $D_2$, $D_3$, $D_4$, $D_5$, $D_6$, $D_7$, $D_8$, $D_9$ and the encoding matrix mentioned above.

The global parity block $P_i$ is expressed as:

$$
P_i = \sum_{j=1}^{9} a_{ij} \times D_j \qquad \text{Formula 3-2.}
$$

The local parity block $L_i$ is expressed as:

$$
L_i = \sum_{j=1}^{9} a_{ij} \times D_j + \sum_{j=1}^{3} d_{3(i-1)+j} \times D_{3(i-1)+j}, \quad 1 \le i \le 3 \qquad \text{Formula 3-3.}
$$

Based on the above Formula 3-2 and Formula 3-3, global parity blocks $P_1$, $P_2$, $P_3$ and local parity blocks $L_1$, $L_2$, $L_3$ can be obtained.

The above data blocks $D_1$, $D_2$, $D_3$, $D_4$, $D_5$, $D_6$, $D_7$, $D_8$, $D_9$, the global parity blocks $P_1$, $P_2$, $P_3$, and the local parity blocks $L_1$, $L_2$, $L_3$ may be divided into three data groups: $G_1 = \{D_1, D_2, D_3, L_1, P_1\}$, $G_2 = \{D_4, D_8, D_6, L_2, P_2\}$, $G_3 = \{D_7, D_8, D_9, L_3, P_3\}$.

When a single parity block in any data group is lost, data recovery may be performed through the other four data blocks within the group. For example, when $D_1$ is lost, $D_1$ can be recovered through $D_2$, $D_3$, $L_1$ and $P_1$.

An addition of the local parity blocks $L_1$, $L_2$, $L_3$ may be regarded as a new global parity block $P_4$. $P_1$, $P_2$, $P_3$, $P_4$ are linearly independent of each other due to a linear independent relationship between the sum of $L_1$, $L_2$, $L_3$ and $P_1$, $P_2$, $P_3$. Therefore, when any four data blocks in $D_1$, $D_2$, $D_3$, $D_4$, $D_5$, $D_6$, $D_7$, $D_8$, $D_9$, $P_1$, $P_2$, $P_3$, $L_1$, $L_2$, $L_3$ are lost, the lost data blocks may be recovered according to remaining data blocks.

It should be noted that executive entities of steps of the methods provided in the above embodiments may be the same device, or the methods may also be executed by different devices. For example, an executive entity of steps 101 to 104 may be device A. As another example, an executive entity of steps 101 and 102 may be device A, and an executive entity of step 103 may be device B, etc.

In addition, some processes described in the above embodiments and the accompanying drawings include multiple operations that appear in a specific order. However, it should be clearly understood that these operations may not be executed in the order in which they appear in this description or executed in parallel. The serial numbers of the operations, such as 101, 102, etc., are only used to distinguish different operations, and the serial numbers themselves do not represent any execution order. In addition, these processes may include more or fewer operations, and these operations may be executed sequentially or in parallel. It should be noted that the descriptions of "first", "second" and the like herein are used to distinguish different messages, devices, modules, etc., and they do not represent a sequence, and do not limit that "first" and "second" are different types.

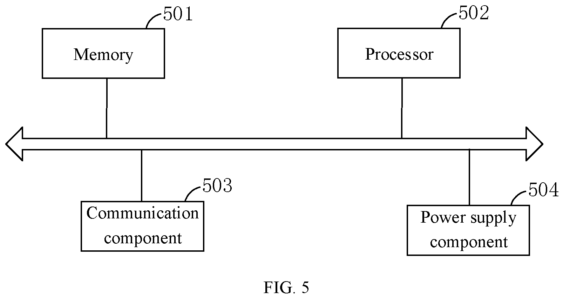

FIG. 5 illustrates a schematic structural diagram of a server provided by an exemplary embodiment of the present application, the server is applicable to the information processing system provided in the aforementioned embodiments. As shown in FIG. 5, the server includes: a memory 501, a processor 502, and a communication component 503.

The memory 501 is configured to store a computer program and may be configured to store various other data to support operations on the server. Examples of such data include instructions for any application program or method operating on the server.

The processor 502 is coupled to the memory 501, and is configured to execute the computer program in the memory 501, so as to: determine multiple data groups included in a data set, where object blocks in any data group include: a data block, a global parity block and a local parity block; in response to a recovery request for any target object block in the data group, recover the target object block according to remaining readable object blocks in the data group; where in the data group, the global parity block and the local parity block are obtained by encoding the data block, the local parity block includes encoding information of the global parity block, and a sum of local parity blocks in the data set is linearly independent of global parity blocks in the data set.

Optionally, the processor 502 is further configured to: in response to a recovery request for a first number of object blocks in the data set, recover the first number of object blocks according to remaining readable object blocks in the data set; where the first number is greater than a number of the global parity blocks in the data set.

Optionally, before responding to the recovery request for any target object block in the data group, according to the remaining readable object blocks in the data group, the processor 502 is further configured to: determine a first matrix of r+1 dimensions, where r is a positive integer; correspondingly generate r derived rows according to any r data rows in the first matrix, where the r derived rows are used for encoding to obtain r local parity blocks, and any derived row includes elements in a data row used to generate the derived row; replace a data row other than the any r data rows in the first matrix with the r derived rows to obtain a second matrix; connect an identity matrix behind the second matrix to obtain an encoding matrix; encode data blocks in the data set by using the encoding matrix to obtain the global parity blocks and the local parity blocks corresponding to the multiple data groups.

Optionally, in the encoding matrix, any r+1 columns are a column full rank matrix.

Optionally, the first matrix is a Cauchy matrix.

Optionally, when correspondingly generating the r derived rows according to any r data rows in the first matrix, the processor 502 is specifically configured to: add, according to a correspondence between elements of different columns in the r data rows and the data groups during matrix calculation, additional items to the elements of different columns in the r data rows to obtain the r derived rows; where in a same derived row, the additional items are added to elements of columns corresponding to any one data group, and in different derived rows, data groups corresponding to elements to which the additional items are added are different.

Optionally, when adding, according to the correspondence between the elements of different columns in the r data rows and the data groups during matrix calculation, the additional items to the elements of different columns in the r data rows, the processor 502 is specifically configured to: for an element of a $j^{th}$ column in an $i^{th}$ data row of the r data rows, determine an additional item of the element of the $j^{th}$ column in the $i^{th}$ data row according to elements of a $j^{th}$ column in r+1 rows of the first matrix; add the additional item to the element of the $j^{th}$ column in the $i^{th}$ data row to obtain a derived row corresponding to the $i^{th}$ data row, where i and j are positive integers.

Optionally, a result of summation of elements in the r derived rows is equal to a result of summation of elements in a $(r+1)^{th}$ row in the first matrix, where the summation includes an exclusive OR operation of elements.

Further, as shown in FIG. 5, the server further includes other components such as a power supply component 504. FIG. 5 only schematically shows some components, which does not mean that the server includes only the components shown in FIG. 5.

The memory 501 may be implemented by any type of volatile or non-volatile storage devices or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic storage, a flash memory, a magnetic disk or an optical disk.

The communication component 503 is configured to facilitate wired or wireless communication between a device where the communication component is located and other devices. The device where the communication component is located may access a wireless network based on a communication standard, such as WiFi, 2G, 3G, 4G, or 5G, or a combination thereof. In an exemplary embodiment, the communication component receives a broadcast signal or broadcast related information from an external broadcast management system via a broadcast channel. In an exemplary embodiment, the communication component may be implemented based on near field communication (NFC) technology, radio frequency identification (RFID) technology, infrared data association (IrDA) technology, ultra wideband (UWB) technology, Bluetooth (BT) technology, and other technologies.

The power supply component 504 is configured to supply power to various components of a device where the power supply component is located. The power supply component may include a power management system, one or more power supplies, and other components associated with generating, managing, and distributing power for the device where the power supply component is located.

In this embodiment, when the recovery request for any target object block in any data group in the data set exists, the target object block can be recovered according to the remaining readable object blocks in the data group. The any target object block may be the data block, the global parity block or the local parity block in the data group. The global parity block and the local parity block are obtained by encoding the data block, and when any data block within the data group is lost, the data block can be recovered according to the remaining data blocks, the global parity block, and the local parity block. The local parity block includes the encoding information of the global parity block, and when the global parity block is lost, the global parity block can be recovered according to the data block and the local parity block. When the local parity block is lost, the local parity block can be recovered according to the data block within the data group. Thus, local recovery for any object block within the data group is achieved. The sum of the local parity blocks in the data set is linearly independent of the global parity blocks in the data set, so the lost object blocks can be recovered when the number of the lost object blocks in the data set is greater than the number of the global parity blocks. Thus, while achieving local recovery of any object block within the group, the fault tolerance capability of the data local recovery method can be improved.

Correspondingly, an embodiment of the present application further provides a computer-readable storage medium storing a computer program, and when the computer program is executed, steps that can be performed by the server in the above method embodiments can be implemented.

Those skilled in the art should understand that embodiments of the present invention may be provided as a method, a system, or a computer program product. Therefore, the present invention may take a form of an embodiment entirely in hardware, an embodiment entirely in software, or an embodiment combining software and hardware aspects. Moreover, the present invention may take a form of a computer program product implemented on one or more computer usable storage media (including but not limited to a disk memory, a CD-ROM, an optical memory, etc.) including computer usable program code.

The present invention is described with reference to flowcharts and/or block diagrams of the methods, devices (systems), and computer program products according to the embodiments of the present invention. It should be understood that each flow and/or block in the flowcharts and/or block diagrams, and combinations of flows and/or blocks in the flowcharts and/or block diagrams may be implemented by computer program instructions. These computer program instructions may be provided to a processor of a general-purpose computer, a special-purpose computer, an embedded processor, or other programmable data processing devices to generate a machine, so that the instructions executed by the processor of the computer or the other programmable data processing devices generate an apparatus for implementing functions specified in one or more flows of the flowcharts and/or one or more blocks of the block diagrams.

These computer program instructions may also be stored in a computer-readable memory that can guide the computer or the other programmable data processing devices to work in a specific manner, so that the instructions stored in the computer-readable memory generate a manufactured product including an instruction apparatus, and the instruction apparatus implements functions specified in one or more flows of the flowcharts and/or one or more blocks of the block diagrams.

These computer program instructions may also be loaded onto the computer or the other programmable data processing devices, so that a series of operation steps are executed on the computer or the other programmable devices to generate computer-implemented processing, and thus the instructions executed on the processor of the computer or the other programmable devices provide steps for implementing functions specified in one or more flows of the flowcharts and/or one or more blocks of the block diagrams.

In a typical configuration, a computing device includes one or more processors (CPUs), an input/output interface, a network interface, and a memory.

The memory may include forms such as a non-permanent memory, a random access memory (RAM), and/or a non-volatile memory, such as read-only memory (ROM) or a flash memory (flash RAM), in computer-readable media. The memory is an example of a computer-readable medium.

The computer-readable media, including permanent and non-permanent, removable and non-removable media, may implement information storage by any method or technology. Information may be computer-readable instructions, data structures, modules of programs, or other data. Examples of storage media for computers include, but are not limited to, a phase change memory (PRAM), a static random access memory (SRAM), a dynamic random access memory (DRAM), other types of random access memory (RAM), a read-only memory (ROM), an electrically erasable programmable read-only memory (EEPROM), a flash memory or other memory technologies, a read-only compact disk read-only memory (CD-ROM), a digital versatile disk (DVD) or other optical storage, a magnetic cartridge, a magnetic disk storage or other magnetic storage devices, or any other non-transmission medium that may be used to store information that can be accessed by computing devices. According to the definition in this description, the computer-readable media do not include transitory computer-readable media (transitory media), such as modulated data signals and carriers.

It should also be noted that terms "including", "comprising", or any other variation thereof are intended to cover non-exclusive inclusion, such that a process, method, commodity or device including a series of elements not only includes those elements, but also includes other elements that are not explicitly listed, or also includes elements inherent to such process, method, commodity or device. Without further limitations, an element defined by a statement "including a/an..." does not exclude the existence of other identical elements in the process, method, commodity or device including that element.

The above description is only embodiments of the present application, and is not intended to limit the present application. For those skilled in the art, the present application may have various modifications and variations. Any modifications, equivalent substitutions, improvements, etc., made within the spirit and principles of the present application, shall be included within the scope of the claims of the present application.

## Claims

1. A data local recovery method, comprising:

   determining multiple data groups comprised in a data set, wherein object blocks in any data group comprise: a data block, a global parity block and a local parity block;
   in response to a recovery request for any target object block in the data group, recovering the target object block according to remaining readable object blocks in the data group;
   wherein in the data group, the global parity block and the local parity block are obtained by encoding the data block, the local parity block comprises encoding information of the global parity block, and a sum of local parity blocks in the data set is linearly independent of global parity blocks in the data set.

2. The method according to claim 1, further comprising:

   in response to a recovery request for a first number of object blocks in the data set, recovering the first number of object blocks according to remaining readable object blocks in the data set;
   wherein the first number is greater than a number of the global parity blocks in the data set.

3. The method according to claim 2, wherein before responding to the recovery request for any target object block in the data group, according to the remaining readable object blocks in the data group, the method further comprises:

   determining a first matrix of r+1 dimensions, wherein r is a positive integer;
   correspondingly generating r derived rows according to any r data rows in the first matrix, wherein the r derived rows are used for encoding to obtain r local parity blocks, and any derived row comprises elements in a data row used to generate the derived row;
   replacing a data row other than the any r data rows in the first matrix with the r derived rows to obtain a second matrix;
   connecting an identity matrix behind the second matrix to obtain an encoding matrix;
   encoding data blocks in the data set by using the encoding matrix to obtain the global parity blocks and the local parity blocks corresponding to the multiple data groups.

4. The method according to claim 3, wherein in the encoding matrix, any r+1 columns are a column full rank matrix.

**5.** The method according to claim 3 or 4, wherein the first matrix is a Cauchy matrix.

**6.** The method according to claim 3, wherein correspondingly generating the r derived rows according to any r data rows in the first matrix comprises:

adding, according to a correspondence between elements of different columns in the r data rows and the data groups during matrix calculation, additional items to the elements of different columns in the r data rows to obtain the r derived rows;
wherein in a same derived row, the additional items are added to elements of columns corresponding to any data group, and in different derived rows, data groups corresponding to elements to which the additional items are added are different.

**7.** The method according to claim 5, wherein adding, according to the correspondence between the elements of different columns in the r data rows and the data groups during matrix calculation, the additional items to the elements of different columns in the r data rows comprises:

for an element of a $j^{th}$ column in an $i^{th}$ data row of the r data rows, determining an additional item of the element of the $j^{th}$ column in the $i^{th}$ data row according to elements of a $j^{th}$ column in r+1 rows of the first matrix;
adding the additional item to the element of the $j^{th}$ column in the $i^{th}$ data row to obtain a derived row corresponding to the $i^{th}$ data row, wherein i and j are positive integers.

**8.** The method according to claim 7, wherein a result of summation of elements in the r derived rows is equal to a result of summation of elements in a $(r+1)^{th}$ row in the first matrix, wherein the summation comprises an exclusive OR operation of elements.

**9.** A server, comprising a memory and a processor;

the memory is configured to store one or more computer instructions;
the processor is configured to execute the one or more computer instructions to perform steps in the method according to any one of claims 1 to 8.

**10.** A computer-readable storage medium storing a computer program, wherein when the computer program is executed by a processor, the data local recovery method according to any one of claims 1 to 8 is capable of being implemented.

Determining multiple data groups included in a data set, where object blocks in any data group include: a data block, a global parity block and a local parity block, where in the data group, the global parity block and the local parity block are obtained by encoding the data block, and the local parity block includes encoding information of the global parity block — 101

In response to a recovery request for any target object block in the data group, recovering the target object block according to remaining readable object blocks in the data group, where a sum of local parity blocks in the data set is linearly independent of global parity blocks in the data set — 102

FIG. 1

Data group 1

Data group 2

$L_1$

$L_2$

$L_r$

Data group r

Data parity     Local parity     Global parity
                block             block

FIG. 2

Data group 1

Data group 2

Data parity     Local parity block     Global parity block

FIG. 3

Data group 1     Data group 2     Data group 3

Data parity     Local parity block     Global parity block

FIG. 4

FIG. 5

## INTERNATIONAL SEARCH REPORT

International application No.

**PCT/CN2023/102218**

### A. CLASSIFICATION OF SUBJECT MATTER

G06F11/10(2006.01)i

According to International Patent Classification (IPC) or to both national classification and IPC

### B. FIELDS SEARCHED

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

CNABS; CNTXT; DWPI; VEN; WPABS; ENTXT; CNKI; IEEE: 数据, 局部, 恢复, 校验, 组, 块, 全局, 线性, data, local, recovery, check, group, block, global, linear

### C. DOCUMENTS CONSIDERED TO BE RELEVANT

| Category* | Citation of document, with indication, where appropriate, of the relevant passages | Relevant to claim No. |
|---|---|---|
| PX | CN 115098295 A (ALIBABA (CHINA) CO., LTD.) 23 September 2022 (2022-09-23) claims 1-10, and description, paragraphs 4-152 | 1-10 |
| X | CN 114385409 A (ALIBABA (CHINA) CO., LTD.) 22 April 2022 (2022-04-22) description, paragraphs 49-115, and figure 2 | 1-10 |
| A | CN 113296695 A (ALIBABA GROUP HOLDING LTD.) 24 August 2021 (2021-08-24) entire document | 1-10 |
| A | CN 113687975 A (CHONGQING UNIVERSITY) 23 November 2021 (2021-11-23) entire document | 1-10 |
| A | US 2020127684 A1 (NAVER CORP. et al.) 23 April 2020 (2020-04-23) entire document | 1-10 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **22 September 2023** | **24 September 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/102218**

| Patent document cited in search report | | | Publication date (day/month/year) | Patent family member(s) | | | Publication date (day/month/year) |
|---|---|---|---|---|---|---|---|
| CN | 115098295 | A | 23 September 2022 | None | | | |
| CN | 114385409 | A | 22 April 2022 | None | | | |
| CN | 113296695 | A | 24 August 2021 | HK | 40059164 | A0 | 06 May 2022 |
| CN | 113687975 | A | 23 November 2021 | None | | | |
| US | 2020127684 | A1 | 23 April 2020 | US | 11218174 | B2 | 04 January 2022 |
| | | | | KR | 20200045919 | A | 06 May 2020 |
| | | | | KR | 102109015 | B1 | 11 May 2020 |

Form PCT/ISA/210 (patent family annex) (July 2022)

**EP 4 550 148 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210764325